# EUROPEAN PATENT APPLICATION

(11) **EP 4 616 721 A1**
(43) Date of publication of application: **17.09.2025**
(21) Application number: 24164012.7
(22) Date of filing: 16.03.2024
(51) Int. Cl.: A23K 50/48, A23K 10/30, A23K 10/20, A23K 10/35, A23K 20/147

(54) **NOVEL PET FOOD COMPOSITION**

(71) Applicant: Omni Pet Ltd., London W1W 7LT (GB)
(72) Inventor: SANDELOWSKY, Guy Alain, London, W1W 7LT (GB); SIVAKUMAR, Sivasankar, London, W1W 7LT (GB)
(74) Representative: Leonard, Thomas Charles

(57) **Abstract**

The present invention relates to an aqueous pet food composition that comprises: (a) a vegetable protein selected from the group consisting of pea protein and soya protein, and mixtures thereof; (b) a flour or a starch selected from the group consisting of wheat flour, pea starch, potato starch, and corn starch, and mixtures thereof, and cultivated meat, and which is ideally meat-free other than the cultivated meat component. The aqueous pet food composition can be used to feed a companion animal, such as a cat.

## Description

### Field of the invention

The present invention relates to an aqueous pet food composition that comprises: (a) a vegetable protein selected from the group consisting of pea protein and soya protein, and mixtures thereof; (b) a flour or a starch selected from the group consisting of wheat flour, pea starch, potato starch, and corn starch, and mixtures thereof, and cultivated meat, and which is ideally meat-free other than the cultivated meat component. The aqueous pet food composition can be used to feed a companion animal, such as a cat.

### Background

In the pet food market consumers can choose between raw food products, freshly cooked products, and dried or wet food products. Wet food products make up a significant share of the market and typically take the form of a solid or semi-solid homogeneous mass comprising a mixture of edible components. Alternatively, the wet food composition may comprise chunks of meat or restructured meat in a gravy or jelly. What the vast majority of the products currently on offer have in common is that they comprise meat products. The demand for meat-based pet products is driven, at least in part, by the commonly-held belief that pets such as dogs and cats are carnivores and thus that they need their protein to come from meat.

Cats, being obligate carnivores, need to gain nutrition from animal sources to ensure certain vital nutrients are obtained - for example pre formed vitamin A and arachidonic acid. Any pet food product suitable for cats must supply cats with these nutrients, in a diet that is palatable, healthy and ideally gives cats an analogous experience of eating a traditional meat based product. Cultivated meat represents a possible source for vital nutrients since its composition can be tailored for optimised health, for example more good amino acids like taurine (that cats need a lot of) and less of the minerals that could contribute to the development of disease, like phosphorus a known precursor to renal disease.

In addition, companion animals such as cats need protein but that protein does not need to come from meat. However, there is wide-spread scepticism to the view that cats can thrive on a meat-free diet, even if the essential nutrients can be supplied in another way. This scepticism comes not just from the consumers purchasing products for their pets but also from those in the veterinary profession.

Existing meat products and meat-based diets are problematic because they typically contain processed meat (a known carcinogen in humans), they have lots of animal fats which is a contributor to pet obesity, and they are a common cause for allergy and food sensitivity. There are also issues around sustainability, with meat-based products placing a great drain on the environment in terms of land, water and CO₂ resources, and animal welfare.

A few vegan and vegetarian pet food options have appeared on the market in recent years. In the wet food market, the options available tend to comprise a solid or semi-solid homogeneous mass or have a "mushy" consistency. For cats, the only meat replacement option available so far uses insects as a source of protein, but uptake of such products has been insignificant due to issues such as taste and lack of consumer acceptance.

In the human food space, there has been a significant drive to find healthier, ethical and more environmentally sustainable alternatives to meat-based foods. Even as little as ten years ago, vegan and vegetarian meat/fish analogues were rare, but now supermarkets and restaurants have many options. The same is not true for the pet food market.

There is an unmet need to provide further pet food options that are meat based but sustainable and healthy and that address environmental and health concerns surrounding animal agriculture and the meat derived from it. The pet food products should ideally also provide protein from meat-free alternative sources, whilst also providing all the nutrient required for a healthy companion animal, such as a cat.

### Summary of the invention

The inventors have developed an aqueous pet food composition comprising cultivated meat that comprises all the nutrients needed by pets, such as protein, without compromising on flavour and textures pets on a meat-based diet are used to and enjoy. Providing a meat-like appearance, taste and texture makes for an easier switch away from traditional meat-based products at an individual pet level and fewer animal products being consumed at a pet population level. A significant proportion of the protein provided in the pet food composition may be from a meat-free source, whilst still providing a meat-like appearance, texture and mouthfeel for the pet.

The complete removal of traditional farmed meat from the aqueous pet food composition addresses concerns about animal welfare linked to the sale of meat-based pet food. As a traditional farmed meat-free product, the aqueous pet food composition offers a more sustainable choice for consumers while at the same time providing healthy and nutritious food for their pets, that in some cases could even be used clinically to treat health problems related to animal protein allergy/sensitivity. On the other hand, the cultivated meat component ensures the product provides all the nutrients required for a healthy pet food product, in particular for cats.

When compared with existing traditional farmed meat-based pet food, the aqueous pet food composition of the present invention may be likened to the meat-based wet food commonly eaten by pets, with chunks in a gravy or jelly. However, the chunks used in the aqueous pet food composition of the present invention are free from traditional farmed animal products. By providing proteinaceous chunks having meat-like texture and chewiness, the invention provides pets with a product having a mouth feel like that of meat products with the benefits of a meat-free diet.

The proprietary inclusion of proteinaceous chunks in combination with cultivated meat distinguishes the aqueous pet food composition from the meat-free and traditional meat products currently available in the pet food market that have a mushy texture. The proteinaceous chunks improve the mouth feel of the aqueous pet food composition, improving long-term palatability and acceptance of the aqueous pet food composition, and leading to improved health and wellbeing.

In addition, the meat-like appearance of the aqueous pet food increases the appeal of the product to consumers looking to move their pet to a reduced meat or traditional farmed meat-free diet, particularly those consumers who remain sceptical about feeding their pets vegan pet food options having a "mushy" consistency that looks so different to the meat chunks their pets are used to eating.

The aqueous pet food composition of the present invention has been developed against the backdrop of wide-spread scepticism in the pet food industry to the view that pets, particularly cats, do not need traditional farmed meat to thrive. Many food manufacturers also lack experience working with meat-free pet food.

Accordingly, the present invention provides an aqueous pet food composition, comprising:
(i) a solid phase; and
(ii) a sauce phase:
wherein:
the solid phase is in the form of proteinaceous chunks and wherein the proteinaceous chunks comprise:
(a) a vegetable protein selected from the group consisting of pea protein and soya protein, and mixtures thereof; and
(b) a flour or a starch selected from the group consisting of wheat flour, pea starch, potato starch, and corn starch, and mixtures thereof
and wherein the pet food composition further comprises cultivated meat.

The aqueous pet food composition is free of any traditional farmed animal products. Generally, the aqueous pet food composition is free of any animal products, with the exception of the cultivated meat.

In a preferred embodiment, the aqueous pet food composition is free from animal products and comprises:
(i) a solid phase; and
(ii) a sauce phase:
wherein:
the solid phase is solid or substantially solid at a temperature of up to about 80 °C and is in the form of proteinaceous chunks, wherein the proteinaceous chunks comprise soya protein and wheat flour;
the sauce phase is (a) gelatinous at room temperature, or (b) liquid at room temperature; and
the sauce phase is interspersed between and around the chunks of the solid phase;
the aqueous pet food composition further comprises cultivated meat;
and optionally wherein the aqueous pet food composition comprises a palatant.

Also provided by the present invention is a process of preparing an aqueous pet food composition as described herein, said process comprising:
(a) forming a proteinaceous mass comprising (a) a vegetable protein selected from the group consisting of pea protein and soya protein, and mixtures thereof; and (b) a flour or a starch selected from the group consisting of wheat flour, pea starch, potato starch, and corn starch, and mixtures thereof;
(b) heating the proteinaceous mass;
(c) shaping the heated proteinaceous mass into proteinaceous chunks;
(d) combining the shaped proteinaceous chunks and a sauce phase, wherein the sauce phase comprises cultivated meat.

The present invention also provides use of an aqueous pet food composition as described herein for feeding a companion animal, preferably wherein the companion animal is a dog or a cat, more preferably a cat.

The composition may comprise at least about 4 wt% cultivated mean based on the total weight of the composition.

The cultivated meat may be cultivated chicken meat. The cultivated meat may be in the sauce phase, or may be in the sauce and solid phase.

### Brief description of the figures

Figure 1 shows images of the aqueous pet food composition of the invention.
Figure 2 shows two individual proteinaceous chunks, one chicken-like (left hand side) and one beef-like (righthand side), used in the aqueous pet food composition of the invention.

### Detailed description

### Aqueous pet food composition

As described above, the aqueous pet food composition comprises:
(i) a solid phase; and
(ii) a sauce phase:
wherein:
the solid phase is in the form of proteinaceous chunks and wherein the proteinaceous chunks comprise: (a) a vegetable protein selected from the group consisting of pea protein and soya protein, and mixtures thereof; (b) a flour or a starch selected from the group consisting of wheat flour, pea starch, potato starch, and corn starch, and mixtures thereof;
and wherein the aqueous pet food composition further comprises cultivated meat.

The term "pet" as used herein refers to a domestic animal, typically a companion animal such as a dog or a cat, preferably a cat.

The term "pet food" as used herein refers to a food composition designed for ingestion by a pet. The aqueous pet food composition described herein may be consumed by a pet as a meal topper which is provided as part of a nutritionally balance meal. Preferably, the aqueous pet food composition described herein is nutritionally balanced such that the aqueous pet food composition provides the pet with all the essential nutrients it needs to maintain a balanced and healthy diet.

As the aqueous pet food composition is free from traditional farmed animal products, the aqueous pet food composition is suitable for pets following a traditional vegan, vegetarian or flexitarian diet, since any meat products are provided as a results of in vitro cultivation rather than traditional farming methods. The aqueous pet food composition does not comprise any products derived from animals that have been farmed. Thus, the aqueous pet food composition does not comprise any animal proteins, egg proteins or milk proteins obtained from an animal, other than those provided by the cultivated meat.

The solid phase is solid at room temperature. Typically, the solid phase is solid or substantially solid at a temperature of up to about 80°C. The solid phase may be solid or substantially solid at a temperature above 80 °C.

The term "proteinaceous chunks" as used herein refers to chunks containing protein. As the aqueous pet food composition is free from farmed animal products, the proteinaceous chunks may be described as cruelty free meat product. The protein source in the proteinaceous chunks provides the protein that would otherwise be provided by animal meat or reformulated animal meet components in meat-based pet food. The cultivated meat may provide a further source of protein, and also a source of essential vitamins and minerals required to provide a balanced diet for a companion animal, in particular a cat.

The proteinaceous chunks generally comprise protein and a carbohydrate. The protein may be pea protein or soya protein. The carbohydrate may be a starch or flour or gluten free equivilent. For example, the carbohydrate may be wheat flour, pea starch, potato starch or corn starch.

The proteinaceous chunks usually comprise: pea protein and wheat flour; pea protein and pea starch; pea protein and potato starch; pea protein and corn starch; soya protein and wheat flour; soya protein and pea starch; soya protein and potato starch; or soya protein and corn starch.

Preferably the vegetable protein is soya protein. Preferably the flour is wheat flour. More preferably the proteinaceous chunks comprise soya protein and wheat flour.

In a preferred embodiment, the aqueous pet food composition comprises:
(i) a solid phase; and
(ii) a sauce phase:
wherein:
the solid phase is solid or substantially solid at a temperature of up to about 80 °C and is in the form of proteinaceous chunks, wherein the proteinaceous chunks comprise soya protein and wheat flour;
the sauce phase is (a) gelatinous at room temperature, or (b) liquid at room temperature; and
the sauce phase is interspersed between and around the chunks of the solid phase;

wherein the composition comprises cultivated meat,
and optionally wherein the aqueous pet food composition comprises a palatant.

The vegetable protein may, for example, be derived from a protein isolate, such as soya protein isolate or pea protein isolate. Protein isolate is a highly refined or purified form of protein with a minimum protein content of 90% on a moisture-free basis. Additionally or alternatively, the vegetable protein may be derived from a concentrate, such as a pea protein concentrate.

The terms "soya" and "soy" may be used interchangeably. Soya protein in the proteinaceous chunks may, for example, be derived from soya protein isolate, optionally made from defatted soy flour which has had most of the non-protein components, fats and carbohydrates removed.

Preferably, the proteinaceous chunks comprise soya protein and wheat flour, wherein the proteinaceous chunks comprise up to about 5 wt% wheat flour based on the total weight of the proteinaceous chunks, preferably up to about 2 wt% wheat flour, more preferably up to about 1.5 wt% wheat flour.

Unless otherwise mentioned, the total weight of the proteinaceous chunks is the weight of the proteinaceous chunks prior to the proteinaceous chunks being combined with the sauce phase. Once the proteinaceous chunks and the sauce phase have been combined, the proteinaceous chunks may absorb moisture from the sauce phase. Thus, a proteinaceous chunk removed from the sauce phase may weigh more than the same proteinaceous chunk prior to its addition to the sauce phase. Where the moisture from the sauce phase is absorbed into the chunks this may advantageously create a "bite explosion" when chewed, enhancing the overall eating experience for the pet.

The combination of (a) the vegetable protein and (b) the flour or the starch, preferably soya protein and wheat flour, and the cultivated meat provides at least the following three advantages.

**First**, by including soya protein in the proteinaceous chunks the inventors have found that the proteinaceous chunks typically have a high protein content and low fat content.

The proteinaceous chunks typically comprise at least about 10 wt% protein based on the total weight of the proteinaceous chunks, for example at least about 15 wt% protein, preferably at least about 20 wt% protein. Usually, the proteinaceous chunks comprise up to about 15 wt% fat based on the total weight of the proteinaceous chunks, preferably up to about 12.5 wt% fat, more preferably up to about 11 wt% fat.

Typically, the proteinaceous chunks comprise from about 10 wt% to about 30 wt% protein based on the total weight of the proteinaceous chunks, preferably from about 15 wt% to about 25 wt% protein, more preferably from about 18 wt% to about 22 wt% protein.

Usually, the proteinaceous chunks comprise from about 10 wt% to about 30 wt% protein and from about 5 wt% to about 15 wt% fat based on the total weight of the proteinaceous chunks, preferably from about 15 wt% to about 25 wt% protein and from about 7.5 wt% to about 12.5 wt% fat, more preferably from about 18 wt% to about 22 wt% protein and from about 9 wt% to about 11 wt% fat.

The aqueous pet food composition typically comprises at least about 4.5 wt% protein based on the total weight of the aqueous pet food composition, preferably at least about 6 wt% protein, more preferably at least about 9 wt% protein.

Usually, the aqueous pet food composition comprises from about 4.5 wt% to about 18 wt% protein based on the total weight of the aqueous pet food composition, preferably from about 6 wt% to about 12 wt% protein, more preferably from about 9 wt% to about 11 wt% protein.

The aqueous pet food composition may comprise from about 4.5 wt% to about 18 wt% protein and from about 1.5 wt% to about 6 wt% fat based on the total weight of the aqueous pet food composition, preferably from about 6 wt% to about 12 wt% protein and from about 2 wt% to about 4 wt% fat, more preferably from about 9 wt% to about 11 wt% protein and from about 3 wt% to about 3.75 wt% fat.

The aqueous pet food composition may comprise from about 6 wt% to about 12 wt% protein, from about 2 wt% to about 4 wt% fat and from about 65 wt% to about 90 wt% moisture based on the total weight of the aqueous pet food composition, preferably from about 9 wt% to about 11 wt% protein, from about 3 wt% to about 3.75 wt% fat and from about 75 wt% to about 85 wt% moisture.

**Second**, without wishing to be bound by theory, it is thought that the inclusion of the flour or the starch (preferably wheat flour) with the vegetable protein (preferably soya protein) helps provide a meat-like texture to the chunks. Thus, usually, the proteinaceous chunks have a meat-like texture. The meat-like texture may be described as chewy and fibrous.

**Third**, the inclusion of the cultivated meat component provide a sustainable, healthy, ethical source of certain nutrients that may be essential for a companion animal's diet. For example, in the case of cats, which are obligate carnivores, the cultivated meat pay provide a source of pre-formed vitamin A and arachidonic acid.

Cultivated meat, also known as lab-grown meat or cell-based meat, refers to meat products that are produced through in vitro cultivation of animal cells, typically utilizing bioreactors and tissue engineering techniques. It involves the propagation and differentiation of animal muscle cells in a controlled environment, without the need for raising and slaughtering animals. Cultivated meat aims to replicate the sensory, nutritional, and culinary properties of conventional meat while offering potential benefits such as reduced environmental impact, improved animal welfare, and increased food security. Methods for the production of cultivated meat are described in, for example, Hong TK, Shin DM, Choi J, Do JT, Han SG. Current Issues and Technical Advances in Cultured Meat Production: A Review. Food Sci Anim Resour. 2021 May;41(3):355-372. doi: 10.5851/kosfa.2021.e14. Epub 2021 May 1. PMID: 34017947; PMCID: PMC8112310. Cultivated meat for use in the present invention is *in vitro* cultivated meat.

The cultivated meat may be cultivated or cultured meat cells. The cultivated meat may be cultivated or cultured animal cells. In some embodiments, the cultivated meat may comprise immortalised animal cells.

The cultivated meat may be cultivated animal meat, such as chicken meat. References to "meat" herein may also refer to "cells".

The cultivated meat may be derived from differentiated embryonic stem cells, such as chicken embryonic stem cells. The embryonic stem cells may be subjected to particular growth and differentiation factors to provide, for example, cultivated muscle cells. The present invention therefore may utilise cultivated or cultured muscle cells, for example cultivated or cultured chicken muscle cells.

The cultivate meat may comprise immortalised cells, such as immortalised chicken cells. In some embodiments, the cultivated meat is cultivated muscle tissue. In some embodiments, the cultivated meat is cultivated chicken muscle tissue.

The cultivated meat may be cultured to provide a biomass of cultivated meat. The biomass of cultivated meat may be incorporated into the pet food composition. In some embodiments, the cultivated meat present in the pet food composition is provided in the form of a biomass of cultured animal cells, such as cultured chicken cells.

Incorporation of the cultivated meat may be achieved by any suitable means. For example, the cultivated meat may be incorporated into the sauce phase of the pet food composition, for example via emulsification or high shear mixing.

The aqueous pet food composition typically comprises proteinaceous chunks having a fibrous structure. The fibrous structure usually substantially resembles meat fibres, wherein the interior of the proteinaceous chunks has a filamentous shape that can be seen by the eye, and has a toughness and elasticity comparable to muscle fibres found in meat. This provides the proteinaceous chunks with a chewy texture. A meat-like or chewy texture is advantageous because it provides superior bite and mouthfeel, which may be indistinguishable from real meat, increasing the acceptability of the aqueous pet food composition to pets and due to relatively low inclusion of cultivated meat cells. The aqueous pet food composition may also look more appetising to the pet owners than meat-based pet food products currently available because the meat in such products tends to be low quality and often not as plump and generously portioned.

The meat-like texture or fibrous structure of the proteinaceous chunks advantageously provides a 3-dimensional structure with a nutritional value comparable to real meat. The structure can be likened to stewed meat, pulled beef or pieces, providing good mouthfeel and a natural eating experience. The fibrous structure may also allow absorption of some sauce into the proteinaceous chunks, with the sauce (and any incorporated flavours) being released when the aqueous pet food composition is chewed.

The proteinaceous chunks may be any size appropriate for pet consumption. Pets tend not to chew their food as much as humans do on apprehension, and so larger pieces are more likely to get swallowed whole and could cause gastrointestinal obstruction or choking. As an example, this means that the "fillet steaks" or patties often found in human products suitable for vegans would not be suitable for pets.

The proteinaceous chunks may be a variety of different shapes and sizes, regularly shaped or irregularly shaped, similar sizes or dissimilar sizes. Thus, the proteinaceous chunks may not be of a uniform shape and size. The solid phase may comprise proteinaceous chunks that are, for example, substantially cube shaped and/or substantially cuboid shaped.

Typically, the solid phase comprises proteinaceous chunks having a volume of at least 0.40 cm³, preferably at least 1.00 cm³, and optionally additionally proteinaceous chunks having a volume of less than about 0.40 cm³. The volume of at least 0.40 cm³, preferably at least 1.00 cm³ is the volume of individual proteinaceous chunks and not the total volume of all proteinaceous chunks present.

As an example, a proteinaceous chunk having a volume of at least 1.00 cm³ would, if shaped to form a substantially cube shape, have three dimensions of approximately 1.00 cm each. The volume of a single proteinaceous chunk may be measured by measuring the amount of water the proteinaceous chunk displaces when placed in a container of water.

Usually, the solid phase comprises proteinaceous chunks that have a volume of from about 0.40 cm³ to about 125 cm³, preferably from about 0.8 cm³ to about 25 cm³, more preferably from about 0.9 cm³ to about 5 cm³.

The aqueous pet food composition usually comprises from about 5 to about 75 wt.% proteinaceous chunks based on the total weight of the aqueous pet food composition, preferably from about 35 to about 55 wt.% proteinaceous chunks.

The proteinaceous chunks may comprise further components that provide additional sources of protein. The protein source may be any commonly used plant protein, in particular selected from the group consisting of legume, including pea, bean, chickpea, and fava bean; cereal, including soy, wheat, oat and bran; rapeseed; cotton seed; sunflower; sesame; lupin; potato, and mixtures thereof, for example potato protein. One or more additional plant proteins may be included in the proteinaceous chunks to further enhance the profile of amino acids within the proteinaceous chunks. The one or more additional plant proteins may also help to improve the texture of the proteinaceous chunks, providing a meat-like elasticity. In addition, the one or more additional plant proteins (particularly potato protein) may improve the digestibility of the proteinaceous chunks. In some embodiments, cultivated meat (for example cultivates meat cells) may be incorporated into the proteinaceous chunks.

Vitamin B₁₂ may be added to the proteinaceous chunks or the sauce phase. Vitamin B₁₂ is commonly found in animal products and is required for normal functioning of the nervous system and the brain. As the aqueous pet food composition is free from animal products, the addition of vitamin B₁₂ provides a source of this important nutrient without the need for the pet to additionally consume meat-based products.

Iron (e.g., as ferric-Ill-pyrophosphate) may be added to the proteinaceous chunks or the sauce phase. The inclusion of iron advantageously ensures the pet consuming the aqueous pet food composition has sufficient iron in their diet.

When iron and vitamin B₁₂ are both present in the aqueous pet food composition, the iron and vitamin B₁₂ may be added as a blend of iron (ferric-lll-pyrophosphate), vitamin B₁₂ (cyanocobalamin 0.1% on potato starch) and maltodextrin.

Vitamin A and/or arachidonic acid may be added to the pet food composition. Accordingly, in some embodiments the pet food composition comprises vitamin A and/or arachidonic acid. The pet food composition may comprise vitamin A and/or arachidonic acid from a source other than cultivated meat. In some embodiments, the cultivated meat component may comprise vitamin A and/or arachidonic acid.

Preferably, the proteinaceous chunks comprise soya protein, wheat flour, soya flour, and corn flour. The inventors have found that proteinaceous chunks comprising soya protein, wheat flour, soy flour, and corn flour advantageously provide the desired meat-like texture and stimulate protein sensors in the pet's mouth, while also being high in protein and low in fat.

Preferably, the proteinaceous chunks additionally comprise potato protein. Thus, for example, the proteinaceous chunks may comprise soya protein, wheat flour, soy flour, corn flour, and potato protein.

The proteinaceous chunks may additionally comprise natural flavours to enhance the flavour profile of the individual chunks. Flavour may also be enhanced by the presence of the cultivated meat

The proteinaceous chunks may look like pieces of chicken or fish. Thus, the proteinaceous chunks may be light brown in colour. Where a darker colour is desirable, for example, so that the proteinaceous chunks resemble beef or lamb, an additional component may be added to darken the colour of the chunks. Any suitable colour-providing component may be added. The inventors have, for example, found that barley malt extract and/or caramel may be added to the proteinaceous chunks to provide a colour that resembles beef.

Usually, the proteinaceous chunks comprise a plant-based fat, for example, to provide essential fatty acids. The term "fat" as used herein refers to glycerides selected from triglycerides, diglycerides, monoglycerides, phosphoglycerids and combinations thereof. The term fat encompasses fats that are liquid at room temperature (commonly also referred to as oils) as well as fats that are solid or semi-solid at room temperature (20 °C). Preferably the fat will be liquid at room temperature.

Preferably, the plant based fat is selected from the group consisting of shea butter, rapeseed oil, canola oil, corn oil, coconut fat, rice brain oil, safflower oil, sesame oil, peanut oil, sunflower oil, linseed oil, olive oil and palm fat, and mixtures thereof. The fat may be optionally fully or partly hydrogenated, although unsaturated fats may be preferred for their health benefits. A particularly preferred plant-based fat is sunflower oil.

Preferably, the proteinaceous chunks comprise water. For example, the proteinaceous chunks may comprise from about 50 wt% to about 70 wt% water based on the total weight of the proteinaceous chunks, preferably from about 55 wt% to about 65 wt% water.

Usually, the proteinaceous chunks comprise a plant-based fat (preferably sunflower oil) and water.

The aqueous pet food composition may be referred to as "chunk in sauce". The term "sauce" as used herein refers to an aqueous composition that is (a) gelatinous at room temperature, or (b) liquid at room temperature.

The gelatinous phase may comprise any suitable gelling agent that is free from animal products. Suitable gelling agents include, but are not limited to, pectin, starch (including cornstarch and wheat flour), agar agar, carrageenan, guar gum, cassia gum, and xanthan gum, and mixtures thereof.

The sauce phase may comprise a jelly or a gravy. The choice of jelly or gravy may depend upon the desired look and taste of the aqueous pet food composition. Options include (i) providing "beef in gravy", wherein the aqueous pet food composition comprises proteinaceous chunks formulated to look like beef and wherein the sauce comprises a gravy, and (ii) providing "chicken in jelly", wherein the aqueous pet food composition comprises proteinaceous chunks formulated to look like chicken and wherein the sauce comprises a jelly. "Beef in gravy" may, for example, comprise proteinaceous chunks comprising barley malt extract and/or caramel so that the proteinaceous chunks have a beef-like colour.

Usually the jelly comprises water, pectin, and corn starch, preferably water, pectin, corn starch, and caramel. An example composition for the jelly comprises water 93 wt%, pectin 4.5 wt %, corn starch 2 wt %, and caramel 0.5 wt %.

Usually the gravy comprises water, corn starch, xanthan gum and guar gum, preferably water, corn starch, xanthan gum, guar gum and caramel. An example composition for the gravy comprises water 93.5 wt%, corn starch 2 wt%, xanthan gum 2 wt%, guar gum 2 wt%, and caramel 0.5 wt%.

The sauce phase may be interspersed between and around the chunks of the solid phase. The individual proteinaceous chunks are typically in contact with the sauce phase. Individual chunks may not be entirely surrounded by the sauce phase. Thus, a first proteinaceous chunk may be in contact with one or more further proteinaceous chunks. As mentioned above, the proteinaceous chunks may absorb moisture from the sauce phase.

The cultivated meat may be provided as part of the composition in the sauce phase. In some embodiments, the cultivated meat may be provided as part of the composition in the solid phase. In some embodiments, the cultivated meat may be provided as part of the composition in both the sauce phase and the solid phase.

The cultivated meat may be distributed evenly or substantially evenly through the pet food composition. In some embodiments, the cultivated meat may be distributed evenly or substantially evenly through the sauce phase. In some embodiments, the cultivated meat may be distributed evenly or substantially evenly through the solid phase. In some embodiments, the cultivated meat may be distributed evenly or substantially evenly, although separately, through the sauce phase and the solid phase.

The cultivated meat may be present, for example in the sauce phase, in the form of an emulsion.

The sauce phase may cover or coat the solid phase.

In some embodiments, the pet food composition comprises at least about 4 wt% cultivated meat by total weight of the composition. In some embodiments, the pet food composition comprises up to about 80 wt% cultivated meat by total weight of the composition. In some embodiments, the pet food composition comprises from about 4 wt% up to about 80 wt % cultivated meat by total weight of the composition. In some embodiments, the pet food composition comprises from about 4 wt% up to about 50 wt % cultivated meat by total weight of the composition. In some embodiments, the pet food composition comprises from about 4 wt% up to about 15 wt % cultivated meat by total weight of the composition.

Generally, the pet food composition is free of farmed animal products.

Generally, the pet food compositions are free of animal products, with the exception of the cultivated meat.

The aqueous pet food composition may comprise a palatant. The term "palatant" as used herein refers to an additive used to increase the palatability of the composition to a pet. Palatants are typically designed to appeal to one or more of a pet's sensory capacities, for example, improving the taste, smell and/or texture of the food to increase its appeal to the pet. Typically, the palatant enhances the flavour and/or smell of the product to the pet. The skilled person will be aware that there are a wide variety of palatants available for use in pet food.

The palatant may be present in the proteinaceous chunks or in the sauce phase, or in both the proteinaceous chunks and in the sauce phase.

Any suitable palatant may be used in the aqueous pet food composition. Preferably, the palatant comprises yeast extract (such as an extract of *Saccharomyces cerevisiae*) or plant protein (such as a plant protein as defined herein, preferably pea protein). The term "yeast extract" as used herein refers to yeast product comprising the cell contents of yeast without the cell walls. Example palatants include, but are not limited to, Ohly-GO^{®} Meaty, which comprises a yeast extract produced from primary cultivated baker's yeast (*Saccharomyces cerevisiae*), and Palasurance^{®} P D70-250 liquid, which comprises pea protein and sodium chloride.

The choice of palatant may depend, for example, on the desired flavour profile. The palatant may also be used to achieve the desired colour for the solid phase or the sauce phase. Palasurance^{®} P D70-250 liquid has a brown colour and thus may, for example, be advantageously used for providing a brown colour. In contrast, Ohly-GO^{®} Meaty has a light brown colour and thus may, for example, be advantageously used for providing a light brown colour. The palatant may be selected complimentary to the flavour of the cultivated meat
The aqueous pet food composition may comprise from about 1 wt% to about 5 wt% palatant based on the total weight of the aqueous pet food composition, for example about 2 wt% to about 4 wt% palatant. For example, the aqueous pet food composition may comprise about 2.5 wt% palatant.

Pets often eat one or two types of food for most of their lives. This means the meals provided for pets must be "nutritionally complete", containing all the nutrients (proteins, fats, vitamins and minerals) that the pets need to thrive and to not suffer nutritional deficiencies and consequential health problems.

The aqueous pet food composition may comprise one or more nutritional additives. The term "nutritional additives" as used herein refers to additional components within the aqueous pet food composition that improve the nutritional profile of the product, helping to ensure the aqueous pet food is nutritionally balanced, comprising essential nutrients in appropriate quantities. The skilled person will appreciate that the amount of each nutritional additive included in the aqueous pet food composition will typically be related to the nutritional requirements of the pet consuming the aqueous pet food composition.

The one or more nutritional additives may be present in the proteinaceous chunks or in the sauce phase. Including the one or more nutritional additives in the proteinaceous chunks may improve the overall appearance of the pet food composition, for example, by avoiding an unwanted change in colour of the sauce phase.

Preferably the nutritional additives are selected from the group consisting of vitamins, minerals and amino acids, and mixtures thereof. Preferably vitamins, minerals and/or amino acids are included such that a nutritionally complete pet food is provided.

Suitable vitamins include, but are not limited to, Vitamin A, arachidonic acid, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof.

Suitable minerals include, but are not limited to, Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), and mixtures thereof.

Suitable amino acids include, but are not limited to, DL-Methionine, L-Carnitine, Tryptophan, Taurine, and mixtures thereof.

The addition of vegetable pieces or fruit pieces or seeds, or a combination thereof, may also help to ensure a nutritionally complete aqueous pet food composition is provided, as well as enhancing the flavour, texture and/or smell of the aqueous pet food composition. Enhancing the flavour, texture and/or smell has the added benefit of increasing acceptance of the aqueous pet food composition.

The vegetable pieces or fruit pieces or seeds may be present in the proteinaceous chunks or separate from the proteinaceous chunks. The aqueous pet food composition may therefore comprise vegetable pieces or fruit pieces or seeds, or a combination thereof that are not present within the proteinaceous chunks. Preferably, the vegetable pieces, fruit pieces and/or seeds are separate from the proteinaceous chunks.

The aqueous pet food composition may comprise: the proteinaceous chunks; and the sauce phase; and additionally vegetable pieces, or fruit pieces, or seeds, or a combination thereof. As such, the vegetable pieces or fruit pieces or seeds may be considered to be part of the sauce phase because the vegetable pieces or fruit pieces or seeds are dispersed within the sauce.

The vegetable pieces or fruit pieces or seeds may be made up of a single type of vegetable, fruit or seed or a mix of different vegetables, fruits and/or seeds. The vegetable pieces or fruit pieces or seeds may comprise any suitable vegetable (or vegetables), fruit (or fruits) or seed (or seeds). Suitable vegetables and fruits include, but are not limited to, root vegetables (such as carrots, parsnips, potatoes, and sweet potatoes), squashes (such as butternut squash and courgettes), legumes (such as peas, green beans and broad beans), greens (such as kale and spinach), pumpkins, broccoli, berries (such as cranberries, blueberries, raspberries, strawberries), apples, pears, and tomatoes, and mixtures thereof. Suitable seeds include, but are not limited to, pumpkin seeds, sunflower seeds, hemp seeds, chia seeds, flax seeds, sesame seeds, and mixtures thereof.

The vegetable pieces may be fresh, frozen or dried vegetable pieces or grounded powders. The fruit pieces may be fresh, frozen or dried fruit pieces or grounded powders. The seeds may be fresh, frozen or dried seeds or grounded powders.

Preferably the vegetable pieces and/or fruit pieces are selected from pieces of carrots, peas, pumpkins, parsnips, and tomatoes, and mixtures thereof. For example, the aqueous pet food composition may comprise pumpkin and tomato. Alternatively, the aqueous pet food composition may comprise carrots, peas and parsnips.

Typically, the aqueous pet food composition comprises from about 15 wt% to about 35 wt% vegetable pieces based on the total weight of the aqueous pet food composition, preferably about 20 wt% to about 30 wt% vegetable pieces.

In some embodiments, in the aqueous pet food composition: the proteinaceous chunks comprise soy protein, soy flour, wheat flour, corn flour, potato protein, and sunflower oil; the sauce phase comprises a jelly; and the aqueous pet food composition comprises yeast extract or pea protein, and preferably one or more nutritional additives (such as vitamins, minerals and amino acids, and mixtures thereof) and vegetable and/or fruit pieces. More preferably, the aqueous pet food composition comprises the following nutritional additive: vitamins selected from the group consisting of Vitamin A, Arachidonic acid, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof; minerals are selected from the group consisting of Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), and mixtures thereof; and amino acids are selected from the group consisting of DL-Methionine, L-Carnitine, Tryptophan, and Taurine, and mixtures thereof.

In other embodiments, in the aqueous pet food composition: the proteinaceous chunks comprise soy protein, soy flour, wheat flour, corn flour, potato protein, and sunflower oil; the sauce phase comprises a gravy; and the aqueous pet food composition comprises yeast extract or pea protein, and preferably one or more nutritional additives (such as vitamins, minerals and amino acids, and mixtures thereof) and vegetable and/or fruit pieces. More preferably, the aqueous pet food composition comprises the following nutritional additive: vitamins selected from the group consisting of Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof; minerals are selected from the group consisting of Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), and mixtures thereof; and amino acids are selected from the group consisting of DL-Methionine, L-Carnitine, Tryptophan, and Taurine, and mixtures thereof.

In further embodiments, in the aqueous pet food composition: the proteinaceous chunks comprise soy protein, soy flour, wheat flour, corn flour, potato protein, barley malt extract, and sunflower oil; the sauce phase comprises a gravy; and the aqueous pet food composition comprises pea protein, and preferably one or more nutritional additives (such as vitamins, minerals and amino acids, and mixtures thereof) and vegetable and/or fruit pieces. More preferably, the aqueous pet food composition comprises the following nutritional additive: vitamins selected from the group consisting of Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof; minerals are selected from the group consisting of Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), and mixtures thereof; and amino acids are selected from the group consisting of DL-Methionine, L-Carnitine, Tryptophan, and Taurine, and mixtures thereof.

The aqueous pet food composition of the present invention has been developed specifically for pets, it is safe for pets to consume and may comprise an optimised palatability profile developed specifically for pets, with their unique taste buds in mind. When comprising vegetable pieces and/or fruit pieces and essential nutrients, the aqueous pet food composition of the present invention provides a nutritionally complete meal for a pet. As such the aqueous pet food composition typically comprises a different nutritional profile to meat-free food for humans because many products developed for humans contain additives, such as flavour enhancing aromatics, that are toxic to animals or simply do not appeal because of the differences between the way humans and pets screen their food. In addition, the range of products available for humans lacks a chunks in a gravy or jelly option.

Preferably the proteinaceous chunks comprise:
- soya protein, soya flour, potato protein, wheat flour, corn flour, sunflower oil, and water;
- soya protein, soya flour, soya bean flour, potato protein, wheat flour, corn flour, sunflower oil, and water;
- soya protein, soya flour, potato protein, wheat flour, corn flour, sunflower oil, barley malt extract, and water; or
- soya protein, soya flour, soya bean flour, potato protein, wheat flour, corn flour, sunflower oil, barley malt extract, and water.

The proteinaceous chunks may further comprise cultivated meat.

Preferably:
- (i) the proteinaceous chunks comprise: soya protein, soya flour, potato protein, wheat flour, corn flour, sunflower oil, water, and barley malt extract; and (ii) the sauce phase comprises: gravy, caramel, and water; and the aqueous pet food composition comprises pumpkin and tomato;
- (i) the proteinaceous chunks comprise: soya protein, soya flour, potato protein, wheat flour, corn flour, sunflower oil, water, and barley malt extract; and (ii) the sauce phase comprises: gravy and water; and the aqueous pet food composition comprises pumpkin and tomato;
- (i) the proteinaceous chunks comprise: soya protein, soya flour, potato protein, wheat flour, corn flour, sunflower oil, water, barley and malt extract; and (ii) the sauce phase comprises: gravy, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises pumpkin and tomato;
- (i) the proteinaceous chunks comprise: soya protein, soya flour, potato protein, wheat flour, corn flour, sunflower oil, water, barley malt extract Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and (ii) the sauce phase comprises: gravy and water; and the aqueous pet food composition comprises pumpkin and tomato;
- (i) the proteinaceous chunks comprise: soya protein, soya flour, potato protein, wheat flour, corn flour, sunflower oil, water, barley malt extract, and yeast extract; and (ii) the sauce phase comprises: gravy, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises pumpkin and tomato;
- (i) the proteinaceous chunks comprise: soya protein, soya flour, potato protein, wheat flour, corn flour, sunflower oil, water, barley malt extract, yeast extract, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and (ii) the sauce phase comprises: gravy and water; and the aqueous pet food composition comprises pumpkin and tomato;
- (i) the proteinaceous chunks comprise: soya protein, soya flour, potato protein, wheat flour, corn flour, sunflower oil, and water; and (ii) the sauce phase comprises: jelly and water; and the aqueous pet food composition comprises carrot and green peas;
- (i) the proteinaceous chunks comprise: soya protein, soya flour, potato protein, wheat flour, corn flour, sunflower oil, and water; and (ii) the sauce phase comprises: jelly, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises carrot and green peas;
- (i) the proteinaceous chunks comprise: soya protein, soya flour, potato protein, wheat flour, corn flour, sunflower oil, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and (ii) the sauce phase comprises: jelly and water; and the aqueous pet food composition comprises carrot and green peas;
- (i) the proteinaceous chunks comprise: soya protein, soya flour, potato protein, wheat flour, corn flour, sunflower oil, and water; and (ii) the sauce phase comprises: jelly, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises carrot, green peas, and parsnip;
- (i) the proteinaceous chunks comprise: soya protein, soya flour, potato protein, wheat flour, corn flour, sunflower oil, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and (ii) the sauce phase comprises: jelly, and water; and the aqueous pet food composition comprises carrot, green peas, and parsnip;
- (i) the proteinaceous chunks comprise: soya protein, soya flour, potato protein, wheat flour, corn flour, sunflower oil, water, and yeast extract; and (ii) the sauce phase comprises: jelly, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises carrot, green peas, and parsnip; or
- (i) the proteinaceous chunks comprise: soya protein, soya flour, potato protein, wheat flour, corn flour, sunflower oil, water, yeast extract, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and (ii) the sauce phase comprises: jelly and water; and the aqueous pet food composition comprises carrot, green peas, and parsnip;
   more preferably,
- (i) the proteinaceous chunks comprise: soya protein, soya flour, potato protein, wheat flour, corn flour, sunflower oil, barley malt extract, yeast extract, and water; and (ii) the sauce phase comprises: gravy, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises pumpkin and tomato; or
- (i) the proteinaceous chunks comprise: soya protein, soya flour, potato protein, wheat flour, corn flour, sunflower oil, water, and yeast extract; and (ii) the sauce phase comprises: jelly, water, Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, DL-Methionine, L-Carnitine, Tryptophan, Taurine, Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), and Selenium (e.g. as L-selenomethionine); and the aqueous pet food composition comprises carrot, green peas and parsnip.

Any of the above described proteinaceous chunks may further comprise cultivated meat.

### Process of preparing an aqueous pet food composition

Also provided by the present invention is a process of preparing an aqueous pet food composition as described herein. The process comprises:
(a) forming a proteinaceous mass comprising (a) a vegetable protein selected from the group consisting of pea protein and soya protein, and mixtures thereof; and (b) a flour or a starch selected from the group consisting of wheat flour, pea starch, potato starch, and corn starch, and mixtures thereof;
(b) heating the proteinaceous mass;
(c) shaping the heated proteinaceous mass into proteinaceous chunks; and
(d) combining the shaped proteinaceous chunks and a sauce phase;
wherein the aqueous pet food composition further comprises cultivated meat.

The vegetable protein, the flour, and the starch are as defined herein. Preferably, step (a) is a step of forming a proteinaceous mass comprising soya flour and wheat flour.

The proteinaceous chunks are proteinaceous chunks as defined herein. The proteinaceous chunks may further comprise cultivated meat. In some embodiments, the proteinaceous mass in step (a) may further comprise cultivated meat.

Further, the sauce phase is a sauce phase as defined herein. The sauce phase may further comprise cultivated meat. The cultivated meat may be present in the sauce phase as an emulsion. The cultivated meat may be incorporated into the sauce phase by emulsification or high shear mixing.

As discussed above, the proteinaceous chunks usually have a meat-like texture. Including proteinaceous chunks having a fibrous structure or meat-like texture advantageously provides a 3-dimensional structure with a nutritional value comparable to real meat.

The process typically uses 3D Extrusion Technology^{™} (PowerHeater^{™}), allowing for the formation of a fibrous structure of the proteinaceous mass, which advantageously provides a 3-dimensional structure with a nutritional value comparable to real meat. Using a "wet extrusion" process, where a 3-dimensional open structure fibre is incorporated into which sauce or moisture can be absorbed, is advantageous over High Moisture Extrusion. High Moisture Extrusion provides a laminated, dense and 2-dimensional structure having a rubbery mouthfeel and that is unable to absorb flavours, sauces, and moistures.

The step of forming a proteinaceous mass may comprise combining the vegetable protein (preferably soya protein) and the flour/starch (preferably wheat flour) with a plant-based fat (preferably a plant-based fat as described herein, more preferably sunflower oil) and water.

Preferably, the vegetable protein is a soya protein. Typically, the soya protein is hydrated before being combined with the plant-based fat and water, forming an emulsion. Nutritional additives may be added to the proteinaceous mass prior to heating. Preferably, the nutritional additives are selected from the group consisting of vitamins, minerals and amino acids, and mixtures thereof as described herein.

Prior to the addition of the plant-based fat and water, the proteinaceous chunks are usually nutritionally ideal for pet consumption (low fat, high protein, GMO free). After the addition of the plant-based fat and water, the interior of the proteinaceous chunks typically has an obvious filamentous shape and a good toughness and elasticity.

The step of heating the proteinaceous mass may, for example, take place in a PowerHeater^{™}. The heat applied is in the range of from about 80 °C to about 85 °C, for example 83 °C, to produce the heated proteinaceous mass.

The heated proteinaceous mass preferably has a consistency such that it is solid enough to stand up on its own and can be easily sliced with a knife.

The step of shaping the heated proteinaceous mass into proteinaceous chunks may be achieved by any suitable method that shapes the proteinaceous mass into proteinaceous chunks of a suitable size for the aqueous pet food composition. For example, the proteinaceous mass may be shaped using a cutting device, by passing the proteinaceous mass through a die or any other method that breaks up the proteinaceous mass. Typically, the proteinaceous mass is shaped using a flexi-cut system with different knife settings to achieve the desired shape and size of the proteinaceous chunks. Shaping the heated proteinaceous mass into proteinaceous chunks may take place after the proteinaceous mass has cooled down.

The shaped proteinaceous chunks may be frozen prior to the step of combining the shaped proteinaceous chunks and the sauce phase, for example at a temperature of from about -20 ° to about -16 °C, e.g. at about -18 °C. Freezing the shaped proteinaceous chunks allows the proteinaceous chunks to be transported between manufacturing sites or between different locations at a single manufacturing site. Freezing the shaped proteinaceous chunks also allows the proteinaceous chunks to be stored for a period of time prior to being combined with the sauce phase.

The step of combining the shaped proteinaceous chunks and the sauce phase provides the aqueous pet food composition. Additional components, such as cultivated meat and/or nutritional additives (such as vitamins, minerals and amino acids, and mixtures thereof as described herein), vegetable pieces as described herein, fruit pieces as described herein, and seeds as described herein may be combined with the shaped proteinaceous chunks and the sauce phase. The vegetable pieces may be added as fresh, frozen or dried vegetable pieces or as grounded powders. The fruit pieces may be added as fresh, frozen or dried fruit pieces or as grounded powders. The seeds may be added as fresh, frozen or dried seeds or as grounded powders.

Preferably, the additional components are dispersed substantially throughout the sauce phase such that they are substantially equally spread throughout the aqueous pet food composition. This means that each mouthful of the aqueous pet food composition comprises similar amounts of the additional components added. For examples, vitamins and minerals added to the aqueous pet food composition may be dispersed substantially throughout the sauce phase. As such the vegetable pieces or fruit pieces or seeds may be considered to be part of the sauce phase because the vegetable pieces or fruit pieces or seeds are dispersed within the sauce.

The aqueous pet food composition may be placed in any suitable storage medium, for example, in cans, pouches or aluminium cups. A can may, for example, hold around 400 g of the aqueous pet food composition. The skilled person will appreciate alternative can sizes may be used.

Once the aqueous pet food composition has been placed into the storage medium, the storage medium is usually sterilised and sealed. The sterilisation step may advantageously provide a shelf life for the aqueous pet food composition of around 1 to 3 years, usually of around 18 to 24 months.

### Use of an aqueous pet food composition

Also provided by the present invention is the use of the aqueous pet food composition as described herein for feeding a companion animal. Preferably, the companion animal is a dog or a cat, more preferably a cat.

The amount of the aqueous pet food composition fed to the companion animal each day will depend upon the type of companion animal and their weight. For a dog having a weight of between 5 kg and 10 kg, the dog may be fed about 500 g to about 900 g of the aqueous pet food composition each day. For a dog having a weight of between 11 kg and 25 kg, the dog may be fed about 950 g to about 1700 g of the aqueous pet food composition each day. For a dog having a weight of between 26 kg and 45 kg, the dog may be fed about 1800 g to about 2750 g of the aqueous pet food composition each day. Cats may be fed smaller amounts, proportional to their smaller size compared to dogs.

The invention will now be described by way of the following non-limited examples.

### Examples

### Ingredients

The ingredients set out below were used in the examples that follow.
Jelly - water 93%, pectin 4.5%, corn starch 2% caramel 0.05%.
Gravy - water 93.05%, corn starch 2%, xanthan gum 2%, guar gum 2% and caramel 0.05%.
Ohly Go^{®} Meaty - palatant - a yeast extract produced from primary cultivated baker's year (*Saccharomyces cerevisiae*).
Palasurance^{®} P D70-250 liquid - palatant - a pea based liquid palatability enhancer comprising pea protein (10-20 %), sodium chloride (1-4 %) and water (up to 100 %). E.g 5% cultivates meat here
Palatant - Ohly Go^{®} Meaty, Palasurance^{®} P D70-250 liquid, or a mixture thereof.

### Example 1 - Proteinaceous chunks

The following components were combined to form dehydrated proteinaceous chunks: soya protein, soya flour, wheat protein, and corn protein.

The following components were combined to form hydrated proteinaceous chunks.
A. Chicken-like chunks - soya protein, soya flour, soya bean flour, potato protein, wheat flour, corn flour, sunflower oil, and iron.
   - Average nutritional value per 100 g: fat 9.1 g and protein 20.3 g.
B. Beef-like chunks - soya protein, soya flour, soya bean flour, potato protein, wheat flour, corn flour, sunflower oil, barley malt extract, and iron.
   - Average nutritional value per 100 g: fat 9.1 g and protein 20.2 g.

Prior to hydration, the proteinaceous chunks are nutritionally ideal for pet consumption (low fat, high protein, GMO free). After rehydration, the interior of the proteinaceous chunks has an obvious filamentous shape, and has good toughness and elasticity.

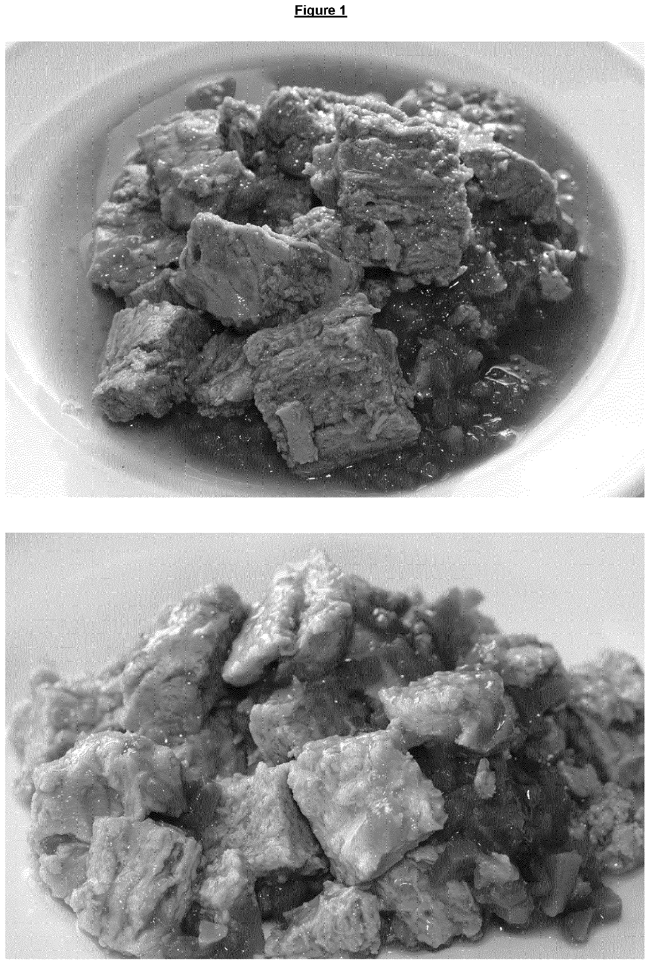

Figure 1 shows images of proteinaceous chunks in a gravy (top) and jelly (bottom). The image shows the meat-like texture of the chunks, with smaller vegetable pieces also visible. In comparison, the pet food currently available in the pet food market lacks the chunks in sauce consistency of the aqueous pet food composition of the present invention.

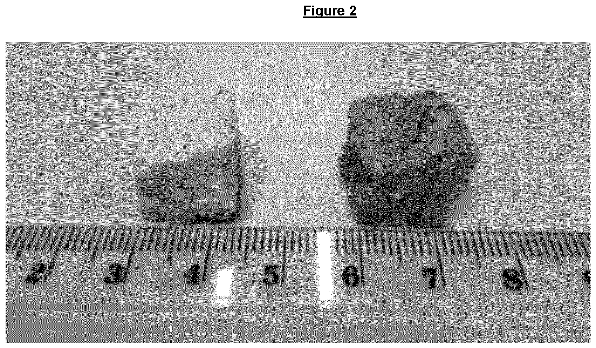

Two individual proteinaceous chunks are shown in Figure 2. The chunk on the left hand side, which is chicken-like, has a light brown colour that resembles the colour of cooked chicken meat. The chunk on the right hand side, which is beef-like, has a darker brown colour that resembles the colour of cooked beef (well-cooked not rare).

### Example 2 - chicken-like chunks

The following amounts of components were combined to form hydrated chicken-like proteinaceous chunks. The fibrous chunks comprise soya protein, soya flour, wheat protein, and corn protein.

### Example 2a:

| | |
|---|---|
| Potato protein | 4.00 wt% +5% cultivated meat |
| Sunflower oil | 8.00 wt% |
| Water | 60.80 wt% |
| Fibrous chunks (dehydrated) | 18.00 wt% |
| Ohly Go Meaty | 1.20 wt% |
| Soy protein | 8.00 wt% |

### Example 2b:

| | |
|---|---|
| Potato protein | 4.00 wt% |
| Sunflower oil | 8.00 wt% |
| Water | 60.75 wt% |
| Fibrous chunks (dehydrated) | 18.00 wt% |
| Ohly Go Meaty | 1.20 wt% |
| Soy protein | 8.00 wt% |
| Nutritional additives mix | 0.05 wt% |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg.
TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

### Example 3 - pet food composition

The following components were combined to form an aqueous pet food composition with a total weight of 1000 kg.

Example 3a (where the composition of the chicken-like proteinaceous chunks is the composition of example 2b):

### Chunks:

| | |
|---|---|
| Chicken-like proteinaceous chunks | 400 kg |
| Dried carrot | 10 kg |
| Dried green peas | 10 kg |

### Jelly sauce:

| | | |
|---|---|---|
| Jelly | | 15 kg |
| Palatant | 25 kg | |
| Water | | remainder |

Example 3b (where the composition of the chicken-like proteinaceous chunks is the composition of example 2a):

### Chunks:

| | |
|---|---|
| Chicken-like proteinaceous chunks | 400 kg |
| Dried carrot | 10 kg |
| Dried green peas | 10 kg |

### Jelly sauce:

| | | |
|---|---|---|
| Jelly | | 15 kg |
| Nutritional additives mix | | 10 kg |
| Palatant | 25 kg | |
| Water | | remainder |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg.
TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

### Example 4 - pet food composition

The following components were combined to form an aqueous pet food composition with a total weight of 1000 kg.

Example 4a (where the composition of the chicken-like proteinaceous chunks is the composition of example 2b):
*Chunks:*

| | |
|---|---|
| Chicken-like proteinaceous chunks | 400 kg |
| Dried carrot | 15 kg |
| Dried green peas | 5 kg |
| Dried parsnip | 5 kg |

*Jelly sauce:*

| | | |
|---|---|---|
| Jelly | | 15 kg |
| Palatant | 25 kg | |
| Water | | remainder |

Example 4b (where the composition of the chicken-like proteinaceous chunks is the composition of example 2a):

### Chunks:

| | |
|---|---|
| Chicken-like proteinaceous chunks | 400 kg |
| Dried carrot | 15 kg |
| Dried green peas | 5 kg |
| Dried parsnip | 5 kg |

### Jelly sauce:

| | | |
|---|---|---|
| Jelly | | 15 kg |
| Nutritional additives mix | | 10 kg |
| Palatant | 25 kg | |
| Water | | remainder |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg.
TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

The analytical constituents of example 4b are:

| | |
|---|---|
| Crude protein [%] | 9.9 |
| Crude fat [%] | 3.1 |
| Crude fibre [%] | 0.6 |
| Crude ash [%] | 0.4 |
| Moisture [%] | 82 |
| Food calorific value [kcal/100g] | 75 |

### Example 5 - beef-like chunks

The following amounts of components were combined to form hydrated beef-like proteinaceous chunks. The fibrous chunks comprise soya protein, soya flour, wheat protein, corn protein, iron and vitamin B₁₂.

### Example 5a:

| | |
|---|---|
| Potato protein | 4.00 wt% |
| Sunflower oil | 8.00 wt% |
| Water | 59.50 wt% |
| Fibrous chunks (dehydrated) | 18.00 wt% |
| Water-soluble malt extract | 1.30 wt% |
| Ohly Go Meaty | 1.20 wt% |
| Soy protein | 8.00 wt% |

### Example 5b:

| | |
|---|---|
| Potato protein | 4.00 wt% |
| Sunflower oil | 8.00 wt% |
| Water | 59.45 wt% |
| Fibrous chunks (dehydrated) | 18.00 wt% |
| Water-soluble malt extract | 1.30 wt% |
| Ohly Go Meaty | 1.20 wt% |
| Soy protein | 8.00 wt% |
| Nutritional additives mix | 0.05 wt% |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg.
TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

### Example 6 - pet food composition

The following components were combined to form an aqueous pet food composition with a total weight of 1000 kg.

Example 6a (where the composition of the beef-like proteinaceous chunks is the composition of example 5b):

### Chunks:

| | |
|---|---|
| Beef-like proteinaceous chunks | 400 kg |
| Dried pumpkin | 10 kg |
| Dried tomato | 10 kg |

### Gravy sauce:

| | | |
|---|---|---|
| Gravy | | 2.5 kg |
| Palatant | 25 kg | |
| Caramel | 0.3 kg | |
| Water | | remainder |

Example 6b (where the composition of the beef-like proteinaceous chunks is the composition of example 5a):

### Chunks:

| | |
|---|---|
| Beef-like proteinaceous chunks | 400 kg |
| Dried pumpkin | 10 kg |
| Dried tomato | 10 kg |

### Gravy sauce:

| | | |
|---|---|---|
| Gravy | | 2.5 kg |
| Nutritional additives mix | | 10 kg |
| Palatant | 25 kg | |
| Caramel | 0.3 kg | |
| Water | | remainder |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg. TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

### Example 7 - pet food composition

The following components were combined to form an aqueous pet food composition with a total weight of 1000 kg.

Example 7a (where the composition of the beef-like proteinaceous chunks is the composition of example 5b):

### Chunks:

| | |
|---|---|
| Beef-like proteinaceous chunks | 400 kg |
| Dried pumpkin | 15 kg |
| Dried tomato | 10 kg |

### Gravy sauce:

| | | |
|---|---|---|
| Gravy | | 2.5 kg |
| Palatant | 25 kg | |
| Water | | remainder |

Example 7b (where the composition of the beef-like proteinaceous chunks is the composition of example 5a):

### Chunks:

| | |
|---|---|
| Beef-like proteinaceous chunks | 400 kg |
| Dried pumpkin | 15 kg |
| Dried tomato | 10 kg |

### Gravy sauce:

| | | |
|---|---|---|
| Gravy | | 2.5 kg |
| Nutritional additives mix | | 10 kg |
| Palatant | 25 kg | |
| Water | | remainder |

The nutritional additives mix contains the following vitamins, minerals and amino acids, where the amounts indicated are per kilogram of the aqueous pet food composition:
VITAMINS: Vitamin A 3500iu, Vitamin E 35 mg, Vitamin C 105mg, Biotin 200µg, Folate 0.4mg, Vitamin B1 5mg, Vitamin B2 8mg, Vitamin B6 4mg, Vitamin B12 80µg, Vitamin B3 25mg, Vitamin B5 25mg, Choline 600mg, Vitamin D3 200iu.
AMINO ACIDS: DL-Methionine 2387mg, L-Carnitine 250mg, Tryptophan 247mg, Taurine 420mg. TRACE ELEMENTS: Iron (e.g., as ferric-Ill-pyrophosphate), Copper (as Copper(II) Sulfate Pentahydrate) 1mg, Zinc (as Zinc Sulfate) 25mg, Iodine (Calcium Iodate Anhydrous) 0.5mg, Manganese (Manganous sulphate monohydrate) 3mg, Selenium (as L-selenomethionine) 0.06mg.

The analytical constituents of example 7b are:

| | |
|---|---|
| Crude protein [%] | 9.3 |
| Crude fat [%] | 3.5 |
| Crude fibre [%] | 0.8 |
| Crude ash [%] | 3.5 |
| Moisture [%] | 83.6 |
| Food calorific value [kcal/100g] | 59.85 |

### Example 9 - process for producing aqueous pet food

Vegetable proteins were hydrated, and then an emulsion made with the isolate with water and oil. This was kneaded together with special flavours, spices, aroma's, and minerals. A PowerHeater^{™} was then used to get the product to a specific temperature (83 °C). After heating, the product was put through a 'flexi-cut' system with knife settings set for the desired shape and size for dogs and cats. The resultant product had a fibrous texture that provides a superior bite and mouth feel to real muscle meat. The product is suitable for freezing (-18 °C).

### Example 10 - Palatability test

Sample size: 10 dogs
Dog type: Mixed small breeds, age range 10 months to 16 years old)
Environment: Kennels
Prior diet: Meat based wet food
Diet trial length: 5 Weeks, sole ration

Ten small mixed breed rescue dogs (mixture of chihuahuas, pomeranians, yorkshire terriers, Shihtzus and dachshunds) were transitioned onto the novel wet food products in 24 hours. The cohort ate the aqueous pet food composition as set out in examples 4b and 7b as a sole ration for 5 weeks and their willingness to eat the diet was assessed in comparison to the meat-based diet that had been fed previously. The criteria used to assess palatability included: speed of consumption, % consumed, salivation in anticipation of feeding once food was observed, tail wagging, twirls and barking. Clinical observations were also assessed such as stool volume, odour and consistency, coat quality and glossiness, and the presence of scale/dandruff.

Results: 100% of the dogs in the cohort were said to have loved the food at least as much as the meat based food being fed previously. They showed signs of enjoyment including rapid consumption, no food was left behind on any of the feeding days. Clinically, stool volume was observed to be lower, less odorous and passed more easily than when the dogs were on the meat-based food, their coats were in great condition and the dogs all seemed well in themselves.

Similar results were obtained when the wet food product was given to cats. Consumption levels observed for dogs were higher than that observed for cats.

### Example 11 - inclusion of the cultivated meat

Pet food compositions comprising cultivated meat are prepared and tested according to any one the above examples. Incorporation of cultivated meat is achieved by emulsification of the cultivated meat into the sauce phase of the pet food product. The cultivated meat is incorporated to provide at least about 4 wt% cultivated meat by total weight of the composition.

### Embodiments

The present invention provides at least the following numbered embodiments:
1. An aqueous pet food composition, comprising:
   (i) a solid phase; and
   (ii) a sauce phase:
   wherein:
   the solid phase is in the form of proteinaceous chunks and wherein the proteinaceous chunks comprise:
   (a) a vegetable protein selected from the group consisting of pea protein and soya protein, and mixtures thereof; and
   (b) a flour or a starch selected from the group consisting of wheat flour, pea starch, potato starch, and corn starch, and mixtures thereof;
   and wherein the pet food composition further comprises cultivated meat.
2. The aqueous pet food composition according to any preceding embodiment, wherein aqueous pet food composition is free of any animal products, with the exception of the cultivated meat.
3. The aqueous pet food composition according to any preceding embodiment, wherein the composition comprises at least about 4 wt% cultivated meat based on the total weight of the aqueous pet food composition.
4. The aqueous pet food composition according to embodiment 1 wherein the composition comprises up to about 80 wt% cultivated meat based on the total weight of the aqueous pet food composition.
5. The aqueous pet food composition according to embodiment 1 wherein the composition comprises from about 4 wt% up to about 80 wt% cultivated meat based on the total weight of the aqueous pet food composition.
6. The aqueous pet food composition according to embodiment 1 wherein the composition comprises from about 4 wt% up to about 50 wt% cultivated meat based on the total weight of the aqueous pet food composition.
7. The aqueous pet food composition according to any preceding embodiment, wherein the sauce phase comprises cultivated meat.
8. The aqueous pet food composition according to any preceding embodiment, wherein the cultivated meat is distribution evenly or substantially evenly throughout the sauce phase.
9. The aqueous pet food composition according to any preceding embodiment, wherein the sauce phase comprises cultivated meat in the form of an emulsion.
10. The aqueous pet food composition according to any preceding embodiment, wherein sauce phase coats the solid phase.
11. The aqueous pet food composition according to any preceding embodiment, wherein the cultivated meat is comprised in the solid and the sauce phase.
12. The aqueous pet food composition according to any preceding embodiment, wherein the cultivated meat is cultivated chicken meat.
13. The aqueous pet food composition according to any preceding embodiment, wherein the cultivated meat is cultivated chicken muscle tissue.
14. The aqueous pet food composition according to any preceding embodiment wherein
   the solid phase is solid or substantially solid at a temperature of up to about 80°C and is in the form of proteinaceous chunks, wherein the proteinaceous chunks comprise soya protein and wheat flour;
   the sauce phase is (a) gelatinous at room temperature, or (b) liquid at room temperature; and
   the sauce phase is interspersed between and around the chunks of the solid phase;
   and optionally wherein the aqueous pet food composition comprises a palatant.
15. The aqueous pet food composition according to any preceding embodiment comprising from about 4.5 wt% to about 18 wt% protein and from about 1.5 wt% to about 6 wt% fat based on the total weight of the aqueous pet food composition.
16. The aqueous pet food composition according to any one of the preceding embodiments wherein the proteinaceous chunks have a meat-like texture.
17. The aqueous pet food composition according to any one of the preceding embodiments wherein the solid phase comprises proteinaceous chunks having a volume of at least about 0.40 cm³.
18. The aqueous pet food composition according to any one of the preceding embodiments wherein the solid phase comprises proteinaceous chunks having a volume of at least about 0.40 cm³ to about 2.0 cm³.
19. The aqueous pet food composition according to any one of the preceding embodiments comprising from about 5 to about 75 wt.% proteinaceous chunks based on the total weight of the aqueous pet food composition, optionally from about 35 to about 55 wt.% proteinaceous chunks.
20. The aqueous pet food composition according to any one of the preceding embodiments wherein the proteinaceous chunks further comprise soya flour, and corn flour.
21. The aqueous pet food composition according to any one of the preceding embodiments wherein the proteinaceous chunks comprise a plant-based fat, optionally sunflower oil, and water.
22. The aqueous pet food composition according to any one of the preceding embodiments wherein the aqueous pet food composition comprises a palatant, optionally wherein the palatant comprises yeast extract or pea protein.
23. The aqueous pet food composition according to any one of the preceding embodiments wherein the aqueous pet food composition comprises one or more nutritional additives.
24. The aqueous pet food composition according to embodiment 23, wherein the one or more nutritional additives is selected from the group consisting of vitamins, minerals and amino acids, and mixtures thereof.
25. The aqueous pet food composition according to embodiment 24, wherein:
   the vitamins are selected from the group consisting of Vitamin A, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof;
   the minerals are selected from the group consisting of Iron (e.g., as ferric-III-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), arachidonic acid, and mixtures thereof; and/ or
   the amino acids are selected from the group consisting of DL-Methionine, L-Carnitine, Tryptophan, and Taurine, and mixtures thereof.
26. The aqueous pet food composition according to any one of the preceding embodiments wherein the aqueous pet food composition comprises vegetable pieces or fruit pieces or seeds, optionally selected from pieces of carrots, peas, pumpkins, parsnips, and tomatoes, and a mixture thereof.
27. The aqueous pet food composition according to any one of embodiments 1 to 26 wherein:
   the proteinaceous chunks comprise soya protein, soya flour, wheat flour, corn flour, potato protein, and sunflower oil;
   the sauce phase comprises a gravy and/or a jelly; and
   the aqueous pet food composition comprises yeast extract or pea protein,
   optionally wherein the aqueous pet food composition comprises one or more nutritional additives and vegetable pieces.
28. The aqueous pet food composition according to any one of embodiments 1 to 26 wherein:
   the proteinaceous chunks comprise soya protein, soya flour, wheat flour, corn flour, potato protein, barley malt extract, and sunflower oil;
   the sauce phase comprises a gravy; and
   the aqueous pet food composition comprises yeast extract or pea protein,
   preferably wherein the aqueous pet food composition comprises one or more nutritional additives and vegetable pieces.
29. A process of preparing an aqueous pet food composition according to any one of the preceding embodiments, said process comprising:
   (a) forming a proteinaceous mass comprising (a) a vegetable protein selected from the group consisting of pea protein and soya protein, and mixtures thereof; and (b) a flour or a starch selected from the group consisting of wheat flour, pea starch, potato starch, and corn starch, and mixtures thereof;
   (b) heating the proteinaceous mass;
   (c) shaping the heated proteinaceous mass into proteinaceous chunks; and
   (d) combining the shaped proteinaceous chunks and a sauce phase, wherein the sauce phase comprises cultivated meat.
30. The process according to embodiment 29 wherein forming a proteinaceous mass comprises combining: (a) the vegetable protein (preferably soya protein); and (b) the flour or the starch (preferably wheat flour), with a plant-based fat (such as sunflower oil) and water.
31. The process according to any preceding embodiment, further comprising mixing cultivated meat into the sauce phase by high shear mixing or emulsification.
32. Use of an aqueous pet food composition according to any one of the preceding embodiments for feeding a companion animal, optionally wherein the companion animal is a cat.

## Claims

1. An aqueous pet food composition, comprising:
(i) a solid phase; and
(ii) a sauce phase:
wherein:
the solid phase is in the form of proteinaceous chunks and wherein the proteinaceous chunks comprise:
(a) a vegetable protein selected from the group consisting of pea protein and soya protein, and mixtures thereof; and
(b) a flour or a starch selected from the group consisting of wheat flour, pea starch, potato starch, and corn starch, and mixtures thereof;
and wherein the pet food composition further comprises cultivated meat.

2. The aqueous pet food composition according to any preceding claim, wherein aqueous pet food composition is free of any animal products, with the exception of the cultivated meat.

3. The aqueous pet food composition according to any preceding claim, wherein the composition comprises at least about 4 wt% cultivated meat based on the total weight of the aqueous pet food composition, optionally up to about 50 wt% cultivated meat based on the total weight of the aqueous pet food composition.

4. The aqueous pet food composition according to any preceding claim, wherein the sauce phase comprises cultivated meat, optionally wherein the cultivated meat is distribution evenly or substantially evenly throughout the sauce phase, further optionally wherein the sauce phase comprises cultivated meat in the form of an emulsion.

5. The aqueous pet food composition according to any preceding claim, wherein the cultivated meat is cultivated chicken muscle tissue.

6. The aqueous pet food composition according to any preceding claim wherein
the solid phase is solid or substantially solid at a temperature of up to about 80°C and is in the form of proteinaceous chunks, wherein the proteinaceous chunks comprise soya protein and wheat flour;
the sauce phase is (a) gelatinous at room temperature, or (b) liquid at room temperature; and
the sauce phase is interspersed between and around the chunks of the solid phase;
and optionally wherein the aqueous pet food composition comprises a palatant.

7. The aqueous pet food composition according to any preceding claim comprising from about 4.5 wt% to about 18 wt% protein and from about 1.5 wt% to about 6 wt% fat based on the total weight of the aqueous pet food composition.

8. The aqueous pet food composition according to any one of the preceding claims wherein the proteinaceous chunks have a meat-like texture and/or the proteinaceous chunks have a volume of at least about 0.40 cm³ to about 2.0 cm³.

9. The aqueous pet food composition according to any one of the preceding claims comprising from about 5 to about 75 wt.% proteinaceous chunks based on the total weight of the aqueous pet food composition, optionally from about 35 to about 55 wt.% proteinaceous chunks.

10. The aqueous pet food composition according to any one of the preceding claims wherein:
a. the proteinaceous chunks further comprise soya flour, and corn flour;
b. proteinaceous chunks comprise a plant-based fat, optionally sunflower oil, and water;
c. the aqueous pet food composition comprises a palatant, optionally wherein the palatant comprises yeast extract or pea protein;
d. the aqueous pet food composition comprises one or more nutritional additives, wherein the one or more nutritional additives is selected from the group consisting of vitamins, minerals and amino acids, and mixtures thereof, wherein: the vitamins are selected from the group consisting of Vitamin A, arachidonic acid, Vitamin E, Vitamin C, Biotin, Folate, Vitamin B1, Vitamin B2, Vitamin B6, Vitamin B12, Vitamin B3, Vitamin B5, Choline, Vitamin D3, and mixtures thereof; the minerals are selected from the group consisting of Iron (e.g., as ferric-Ill-pyrophosphate), Copper (e.g. as Copper(II) Sulfate Pentahydrate), Zinc (e.g. as Zinc Sulfate), Iodine (e.g. Calcium Iodate Anhydrous), Manganese (e.g. Manganous sulphate monohydrate), Selenium (e.g. as L-selenomethionine), and mixtures thereof; and/ or the amino acids are selected from the group consisting of DL-Methionine, L-Carnitine, Tryptophan, and Taurine, and mixtures thereof;
e. the aqueous pet food composition comprises vegetable pieces or fruit pieces or seeds, optionally selected from pieces of carrots, peas, pumpkins, parsnips, and tomatoes, and a mixture thereof.

11. The aqueous pet food composition according to any one of claims 1 to 10 wherein:
the proteinaceous chunks comprise soya protein, soya flour, wheat flour, corn flour, potato protein, and sunflower oil;
the sauce phase comprises a gravy and/or a jelly; and
the aqueous pet food composition comprises yeast extract or pea protein,
optionally wherein the aqueous pet food composition comprises one or more nutritional additives and vegetable pieces.

12. The aqueous pet food composition according to any one of claims 1 to 10 wherein:
the proteinaceous chunks comprise soya protein, soya flour, wheat flour, corn flour, potato protein, barley malt extract, and sunflower oil;
the sauce phase comprises a gravy; and
the aqueous pet food composition comprises yeast extract or pea protein,
preferably wherein the aqueous pet food composition comprises one or more nutritional additives and vegetable pieces.

13. A process of preparing an aqueous pet food composition according to any one of the preceding claims, said process comprising:
(a) forming a proteinaceous mass comprising (a) a vegetable protein selected from the group consisting of pea protein and soya protein, and mixtures thereof; and (b) a flour or a starch selected from the group consisting of wheat flour, pea starch, potato starch, and corn starch, and mixtures thereof;
(b) heating the proteinaceous mass;
(c) shaping the heated proteinaceous mass into proteinaceous chunks; and
(d) combining the shaped proteinaceous chunks and a sauce phase, wherein the sauce phase comprises cultivated meat; wherein the method optionally comprises a step of mixing cultivated meat into the sauce phase by high shear mixing or emulsification

14. The process according to claim 29 wherein forming a proteinaceous mass comprises combining: (a) the vegetable protein (preferably soya protein); and (b) the flour or the starch (preferably wheat flour), with a plant-based fat (such as sunflower oil) and water.

15. Use of an aqueous pet food composition according to any one of the preceding claims for feeding a companion animal, optionally wherein the companion animal is a cat.
